# EUROPEAN PATENT SPECIFICATION

(11) **EP 3 154 873 B1**
(45) Date of publication and mention of the grant of the patent: **26.02.2020**
(21) Application number: 15809421.9
(22) Date of filing: 15.06.2015
(51) Int. Cl.: B65D 81/20, A22C 25/00, B65D 81/26, A22C 25/16, A22C 25/17, A23B 4/16, B65B 25/06, B65B 31/02, B65D 81/28, A23L 17/00, B65B 61/20, B65B 31/00

(54) **METHOD FOR PACKING FISH PRODUCT, FISH PRODUCT PACKAGE**
VERFAHREN ZUM VERPACKEN EINES FISCHPRODUKTS, FISCHPRODUKTVERPACKUNG
PROCÉDÉ D'EMBALLAGE DE PRODUIT DE POISSON, EMBALLAGE DE PRODUIT DE POISSON

(30) Priority: 16.06.2014 FI 20140181
(43) Date of publication of application: 19.04.2017
(73) Proprietor: Arctic IP Investment Ab, 24240 Salo (FI)
(72) Inventor: RUUTTU, Jari, 24240 Salo (FI); KINNUNEN, Petteri, 24240 Salo (FI)
(74) Representative: Papula Oy
(86) International application number: PCT/FI2015/050428
(87) International publication number: WO 2015/193544

(56) References cited:
- EP-A1- 1 481 920
- WO-A1-01/84941
- WO-A1-2004/083062
- DE-U1- 29 711 265
- FR-A1- 2 775 667
- GB-A- 2 231 322
- JP-A- 2014 234 190
- JP-U- S6 177 392
- US-A- 5 250 310
- US-A1- 2007 092 167
- US-A1- 2009 022 857
- ANLAUG ADLAND HANSEN ET AL: "Quality changes of Prerigor Filleted Atlantic Salmon (salmo salar L.) Packaged in Modified Atmosphere Using CO2 Emitter, Traditional MAP, and Vacuum", JOURNAL OF FOOD SCIENCE, vol. 74, no. 6, 31 July 2009 (2009-07-31), pages M242-M249, XP055472004, DOI: 10.1111/j.1750-3841.2009.01233.x
- ANTONIO J. BORDERÍAS ET AL: "First Processing Steps and the Quality of Wild and Farmed Fish", JOURNAL OF FOOD SCIENCE, vol. 76, no. 1, 10 November 2010 (2010-11-10), pages R1-R5, XP055472175, US ISSN: 0022-1147, DOI: 10.1111/j.1750-3841.2010.01900.x

## Description

### Background

The invention relates to a method for packing a fish product, the method comprising packing the fish product in a vacuum package.

Today, the problem is that fish are produced quite elsewhere than where they are consumed. Consequently, transport distances are long and time-consuming. A yet more disadvantageous situation occurs when fish are cultured for instance in Norway and transported for further processing to Poland and only then delivered to a target country, such as France. The transport distance may easily take 4 to 10 days from a fish farm to a further processing plant wherein for instance a graving work process is only first begun. The graving work process itself may take 4 days if the method used is a dry salting method.

The problem is thus that with the current methods, a fish fillet may be of poor quality already before being delivered to an end customer.

A method for packing a fish product is known from patent document FR 2 775 667 A1.

### Brief description

The method according to the invention is disclosed in the appended independent claim 1. Other embodiments of the invention are characterised by what is disclosed in the other claims.

The new method provides a solution to the problem of how to get a fresh processed fish product, such as fish products involving a graving work process, graved salmon, cold or hot smoked fish products, delivered to the destination as fresh as possible and still avoid excess salinity of the fish product being delivered to the customer.

According to the invention, the new method minimizes a time loss caused by the transporting work process by combining two most time-consuming work processes; 1) the graving work process and 2) the transporting work process. Most advantageously, this enables the fish product, such as a fillet of graved salmon, to reach the customer even 7 days earlier.

A further advantage may be that production capacity can be increased at early phases of a fish processing process since it is now unnecessary to store up the fish fillets for 4 days in the graving work process but they can be directly packed in a package manufactured for the purpose and sent on to transport immediately.

The end product may be for instance a graved fish fillet, a hot smoked fish fillet or a cold smoked fish fillet. Optional smoking is preferably carried out after transport, at the destination.

The graving work process referred to herein may be dry salting, wet salting or any work process wherein the fish product has been subjected to the influence of salt and wherein salt affects the composition, texture, taste or the like of the fish flesh in the end product.

In the preparation of graved fish, such as graved salmon, dry salting is carried out for instance using sea salt, and the liquid generated is removed so as not to affect the fish flesh. This is also the procedure in connection with a graved fish fillet, such as a graved salmon fillet, to be used at the destination, i.e. after a combined transporting/graving work process, for cold smoking. Otherwise the amount of salt and the composition of the flesh would be wrong.

A fish fillet meant for hot smoking may first be subjected to a wet salting work process, which may take up to a whole day. After the wet salting work process, the fish fillet is removed from the solution, cleaned and optionally seasoned prior to being placed in a fish product package, where it is left to cook for a necessary period of time. This time period is typically at least one day. In this case, some of the salt is absorbed in the fish flesh while some of it remains on the surface of the fish product, whereby bacterial growth is non-existent. Transporting can be commenced once the fish fillet has been removed from the brine and packed.

In a third embodiment, the brine is left in the package where it is allowed to be in contact with the fish flesh, but then the concentration of the brine is accurately limited to be between 2% and 6%.

In the graving work process, spices, such as dill, pepper, etc., may be added to the fish product. Sugar, honey or, say, maple syrup may also be added. Alcohol, such as whiskey, cognac, gin or the like, may also be used.

According to an idea, a combined graving and transporting work process is carried out as refrigerated transport for instance at a temperature of +3°C such that the work process itself is performed in a sealed space, which may be for instance a vacuum package, a gas atmosphere package, an EPS box with a lid, or any package which enables atmospheric air to be prevented from affecting the work process in question.

According to an idea, the fish fillets are packed such that the appropriate graving work process can be carried out during transport, and that the product can also be stored in the package in question for 30 days, for instance, so that no undesired changes, such as in the form of too high salinity, occur in the composition of the flesh, etc. The graving work process is thus carried out in a desired time, but yet the product can be stored in the same package for long time periods without having to open the package or carry out re-packing.

Salt has two important functions in fish use; it changes the composition of the flesh into the appropriate one, opens up aromas and flavours as well as prevents progression of bacterial growth and putrefaction. As to the shelf-life and flavour of fish, it is thus essential that the fish product can be subjected as early as possible to the graving work process, as now is disclosed in the new method.

In the invention, the method is based on a dry salting method. In a second embodiment, the method is based on a wet salting method where liquid is removed prior to packing and transport. In a third embodiment, the brine is left in the package but its salinity is limited to be between 2% and 6%. In such a case, the time for instance a fillet is to be kept in the package is preferably no more than one week and at a very low temperature at that, for instance below +8°C, most preferably at a temperature below +4°C.

In some cases, the packages may contain brine whose salinity is higher than the aforementioned one, for instance 7% to 15%. It is then preferable to limit the time the fish product, for instance a fillet, is to be kept in the package to 24 hours or even less.

According to an idea, the temperature during the combined graving and transporting work process may be different from the storage temperature of the fish product, for instance +4°C during transport for five days and about 0°C in post-transport storage if the fish product is to be stored before use, for instance for one week in intermediate storage. According to an idea, the temperature is accurately limited to be between -5°C and +8°C, for instance about +3°C during the graving work process itself, and thereafter the storage temperature may be -5°C, for instance. It is to be noted herein that a temperature below 0°C can only be applied after the graving process. An example: if the fish flesh contains 2% of salt, the freezing point is about -5°C, and if the amount of salt is 3%, the freezing point is about -8°C.

When the transport of the fish fillet takes about 6 days to 8 days, according to an idea the transport/graving temperature is for instance only 0°C or no more than +2°C since the salt has time to absorb into the fish fillet during the transport. If the fish fillet is to be transported at a temperature below 0°C, the salt has to be left to absorb into the fish fillet prior to transport, because otherwise the fish fillet will freeze up completely. For example, if the salt is left to affect the fish fillet for instance for 24 hours in, say, a tub under pressure or in brine, and after this the fish fillet is packed in the fish product package described in this description before it has substantially entered an *in rigor* condition, the fish fillet may be transported at a temperature of -2°C.

According to a preferred embodiment, the fish product is packed in a fish product package before it has from a *pre rigor* condition entered the *in rigor* condition, i.e. before the fish product is in rigor mortis. Said transition is a phenomenon highly dependent on the temperature. If the temperature is for instance +2°C, the *pre rigor* condition may last for 3 to 4 days, but if the temperature is, say, 0°C or -1°C, the *pre rigor* condition may last even for a week, i.e. 7 days.

Further, according to another preferred embodiment, the fish fillets, which are preferably also skin-free, are brought shortly after slaughter into brine having for instance a temperature of -1°C to +1°C, say 0°C. A temperature this low makes the fish fillet less prone to shrinkage.

According to an idea, after slaughter, an intermediate work phase is performed for filleting, skinning and preferably also removing the root of the bones, as well as subjecting the fillets to a salting process which may comprise a dry salting, wet salting, injection salting process or a combination of the aforementioned ones. In the salting process, the fish fillets are disposed under weight or pressure so that the shrinkage of the fish fillet can be controlled during the salting. According to an idea, this phase is implemented in the fish product package described in the present description. The intermediate work phase alleviates the subsequent removal of the bones: cutting off the root of the bones from the actual hard bone part reduces the pulling power necessary for removing a bone even by 50%. In addition, the salting reduces the pulling power necessary for removing the bones even by further 50%. The intermediate work phase may take for instance 12 to 24 hours, after which the bones can be removed from the fillet, when necessary. After the intermediate work phase, the fish fillet is placed in a fish product package - or in the new fish product package - wherein it is subjected to pressure, and at the same time salt and spices may be added to the fish product package. Even if the packing in the fish product package takes place for instance only after the intermediate work phase that took 24 hours, the end user will receive a much higher-quality fish product whose quality remains high for instance for 30 days particularly because the fish product can be transported and stored at a temperature that is colder than conventionally.

The intermediate work phase described above mainly serves the removal of bones. According to an idea, the actual graving work process itself takes at least a week and is implemented in the fish product package described in the present description. The pressure caused by the fish product package prevents the fish flesh product from breaking up into parts. In addition, the pressure reduces the amount of water draining from the fish product.

An idea for preparing graved fish has been shown above. This can be further varied, depending on whether or not salt is added to the fish product after the intermediate work phase.

According to another idea, graved fish is prepared by injecting brine into the fish fillet, and the bones are removed or left unremoved; in any case, the fish fillet is placed in the fish product package.

In any case, the graving, i.e. cooking, of the fish product takes place in the fish product package, preferably during transport.

In the present description, the fish product derives from a fish which is wild or cultured and slaughtered. The fish may be skinned or not, the bones may have been removed or left unremoved. Further, the fish is optionally filleted either *pre rigor* or *in rigor.*

In other words, the fish product may be of *pre rigor* quality but its bones may necessarily not have been removed. The combined graving work process and transporting work process may also be carried out such that the bones are included in the fish product.

According to an idea, the fish is skinned and the dark flesh underlying the skin is removed all the way to a depth of 2 to 9 mm. The nerve ends of the bones are then cut, after which the fish fillets are put aside or subjected to a combined graving work process and transporting work process, which may take for instance 8 to 24 hours, after which the bones are very easy to remove.

### Brief description of the figures

The invention will be described in closer detail in the accompanying drawings, in which
Figure 1 is a schematic side view showing a fish product package,
Figure 2 is a schematic side view showing a second fish product package,
Figure 3 is a schematic side view showing a third fish product package,
Figure 4 schematically shows a method for treating a fish product;
Figure 5 schematically shows another method for treating a fish product;
Figure 6 schematically shows a step of a method for treating a fish product;
Figure 7 is a schematic side view showing a fourth fish product package,
Figure 8 is a schematic, cross-sectional side view showing a method for treating a fish product, adapted to the fish product package according to Figure 7,
Figure 9 is a schematic, cross-sectional side view showing a fifth fish product package,
Figure 10 is a schematic top view showing the fish product package according to Figure 9,
Figure 11 is a schematic, cross-sectional side view showing a sixth fish product package,
Figure 12 schematically shows a detail of the fish product package according to Figure 11,
Figure 13 is a schematic, cross-sectional side view showing a seventh fish product package,
Figure 14 is a schematic, cross-sectional side view showing an eighth fish product package, and
Figures 15a, 15b, and 15c are schematic, cross-sectional side views showing a ninth, tenth, and eleventh fish product package.

For the sake of clarity, the figures show the invention in a simplified manner.

### Detailed description

The present method combines two most time-consuming work processes, transport to destination and a graving work process. Both may typically take 4 to 10 days separately, such that the process encompasses one or more fillets, and that the amount of salt in the end product, for instance in a salmon fillet, is constant, irrespective of how long the refrigerated transport or storage work process takes.

According to an idea, the method is a dry salting method suitable for preparing graved fish and cold smoked fish. The method comprises recovering the generated water/brine so that its effect on the fillet itself is eliminated. In such a case, the salinity level of the fish fillet is controllable and the composition, flavour, colour, aroma of the flesh remain excellent and the same as those of products prepared in an authentic environment.

The graving work process is always carried out in a sealed space, such as a vacuum package, a gas atmosphere package, an EPS or another cold insulation package. In any case, the graving process is carried out in a sealed system which prevents atmospheric air from entering the package itself.

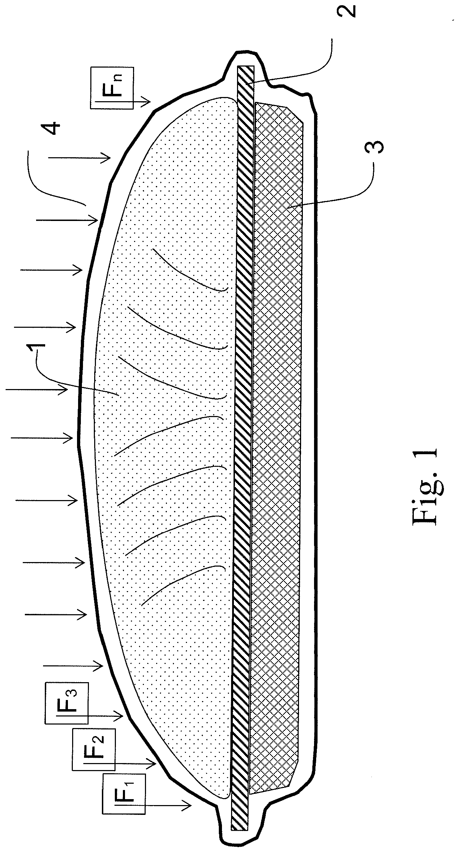

Figure 1 shows how the fish product, such as a fish fillet 1, which preferably is at least skin-free and from which the dark flesh is removed all the way to a depth of 2 to 9 mm and from which most preferably the bones have also been removed, is placed on a substructure 2. The substructure 2 enables the generated liquid to drain through or around the substructure 2 to an underlying space, preferably provided with a liquid recovery system by means of an absorbing element, for instance a liquid absorbing substructure 3.

The absorbing substructure 3 is rigid, so that an empty space arranged therein will remain for the time taken to form a vacuum and, furthermore and most importantly, the empty space will remain in the package as well. Of course, the empty space may also be filled at least partly with liquid originating from the fish product during the combined graving and transporting process.

Preferably, the substructure 2 is rigid so that channels running through or around it for allowing said liquid to move from the fish product to the absorbing substructure 3 remain open in the sealed package.

According to an idea, the empty space of the absorbing substructure 3 may comprise one space or, alternatively, it may be divided into two or more spaces. The empty space may be provided with a liquid absorbing element, in which case liquid binds to the element in question. However, no liquid absorbing element is necessary since liquid typically remains in the empty space due to the influence of the underpressure therein, even if the package were turned upside down.

The entire system is sealed in an air or gas tight package 4, from which air may have been removed by a vacuum packing method known per se.

The composition, colour, flavour, smell or the like of the fish fillet 1 remain extremely high in quality but at the same time bacterial growth is eliminated since no bacteria can enter the package 4 and, again, the vacuum packing method is a known bacterial growth inhibitor. Air containing oxygen has been removed from the package or replaced by an inert protective gas.

According to an idea, the method comprises removing air from the package by replacing it by an inert protection gas, such as carbon dioxide, nitrogen, ozone, or a mixture thereof, after which a vacuum is sucked in the package by removing at least a substantial portion of the inert protective gas that replaced the air. This enables the possibility of air remaining in the package to be minimized.

According to an idea, the package 4, the substructure 2 and/or the liquid absorbing substructure 3 or the absorbing material placed therein may be treated so as to make them antibacterial. For this purpose, they may comprise for instance silver ions, silver oxide or another corresponding coating for inhibiting bacterial growth. Another alternative is to mix a substance component inhibiting bacterial growth directly with the manufacturing material, for instance a thermoplastic.

The transport and storage temperature may be -5°C to +8°C but, preferably, 0°C to +4°C degrees. This low temperature substantially reduces possibilities for bacterial growth.

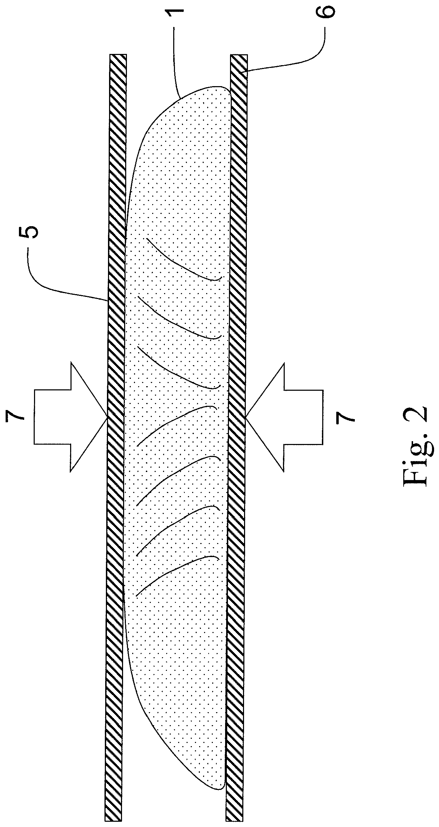

Figure 2 shows how the fish fillet 1 is placed between two planes 5 and 6 such that pressure 7 is generated towards the fillet 1. According to an idea, the pressure 7 corresponds to a weight typically used in dry salting methods.

According to an idea, a pressure difference is generated in the fish product by means of a vacuum package over the pressure surrounding the package, the magnitude of the pressure difference being at least 0.1 kPa, preferably at least 1 kPa, more preferably at least 10 kPa, most preferably at least 50 kPa. The significance of the pressure difference is particularly great when the packed fish product is of the *pre rigor* quality. The pressure difference produces a force pressing the fish product, shown in Figure 1 by means of partial forces F₁... Fₙ. A total force is the sum of the partial forces exerted on the surface area of the fish product.

First, the pressure difference enables shrinkage of the fish product taking place in the *pre rigor* phase to be prevented or at least reduced. The shrinkage of a fillet made of cod, for instance, in a free condition may be more than 30% without the effect of salt, and even 50% after salting. Surprisingly, the inventors have found that the pressure difference enables the shrinkage of the fish product to be reduced.

Second, the inventors have unexpectedly discovered that the pressure difference enables the amount of water draining from the fish product to be reduced. Consequently, the fish product remains juicier and its weight higher, so the fish product holds it value better both for the seller and the end user as well.

The pressure difference may be adjusted according to the desired fish product to be prepared.

It is further to be noted that none of the prior art utilizes *pre rigor* fish products, mainly because of the extensive shrinkage after the addition of salt in particular.

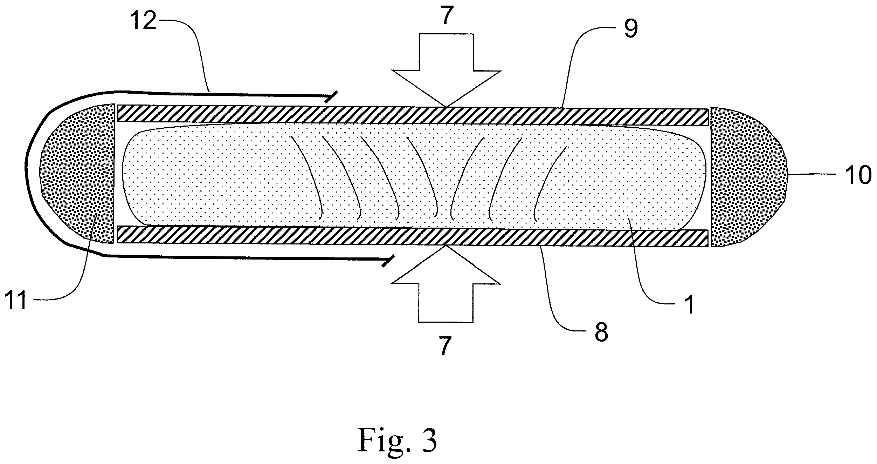

Figure 3 shows how the fish fillet 1 is placed between two rigid and/or hard planes 8 and 9. An edge area of the planes is provided with a liquid absorbing material 10, 11. When a package 12 is tightened, for instance by a vacuum packaging film or a shrink wrap, liquid drains to the edge area, where the liquid is sucked off or absorbed into the absorbing material 10, 11.

If it is known that the fish fillet always lies in the package with the correct side up, it is possible that the generated liquid/brine is simply recovered in a tank. However, for one reason or another, the position of the package may vary during transport, in which case the liquid may flow back onto the fish product. This is not desirable. This can be at least essentially prevented by means of the absorbing material 10, 11.

The absorbing material 10, 11 may be placed in a hollow empty space, such as an interior of a core. The core in question may be manufactured for instance from plastic, food board or another substantially water-insoluble material. The core may be open at least at its one end, and it may alternatively or additionally be provided with openings, for instance holes of 0.01 to 10 mm, at least in surfaces substantially facing the fish product.

In the combined transporting and dry salting work process of a *pre rigor* fish fillet in particular, both the transport distances and the storage times may be long. When, after this, the end product should correspond to the original conventionally prepared product, such as a graved salmon fillet, or a cold smoked fish fillet, which is further smoked, it is preferable that the water/brine drained from the fish fillet is recovered so as to enable its long-term effect on the fish to be mainly prevented.

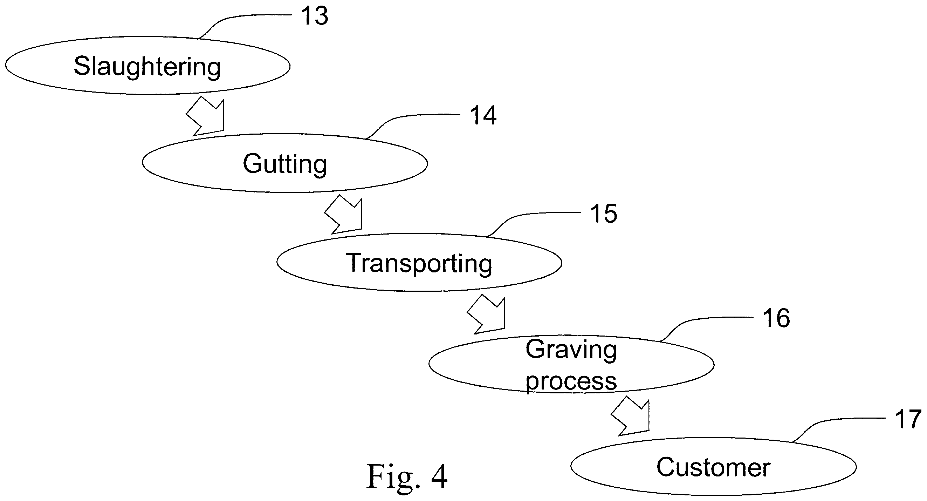

Figure 4 shows a prior art method. A fish, for instance a salmon, is slaughtered 13 for instance in Norway, and placed whole but gutted 14 in an EPS refrigerated transport box, among pieces of ice. The next day starts transporting 15, typically taking 3 to 6 days for instance to Central Europe.

At the destination, the load is unloaded, the fish is filleted, the bones are removed, optionally the skin as well, and the fish is subjected to a dry salt graving work process 16, which takes 4 days. Only after this the product, a graved salmon fillet, is delivered to a customer 17. The product is thus typically already 10 days old before it reaches the customer 17.

Even if the slaughtering 13 is carried out in the *pre rigor* condition and the bones are removed before transporting 15 and only after that the fillets are placed in the EPS transport boxes and the transport 15 started, the delivery of the fish takes exactly as long as transporting 15 the whole fish disclosed above. Herein as well, the graving work process 16 itself takes 4 days, i.e. the duration of both the transporting work process and the graving work process is equally long, irrespective of the fish being delivered to the destination whole (gutted) or as a *pre rigor* fillet. Thus, no *pre rigor* fillet is on the market or at the customer 17 any sooner than any other fish product. This means that the freshness benefit achieved by the *pre rigor* process is lost.

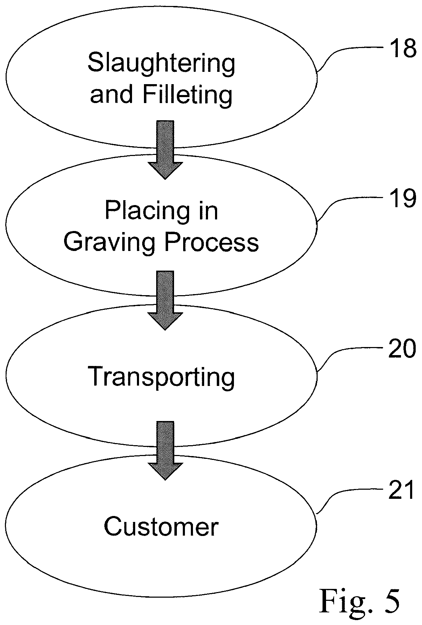

Figure 5 shows a method according to the invention wherein slaughtering 18 is first carried out in an ordinary per se manner. A fish fillet, such as a salmon fillet, preferably skin-free and yet more preferably also having the bones removed therefrom, is placed into a graving work process, i.e. subjected to a dry salting process 19. Only after this is transporting 20 to a destination started. The fish fillet is completely graved during the transport, which means that the completely graved fish fillets can be delivered directly or immediately to a customer 21. This method is at least one-and-a-half times, i.e. 50%, quicker than the known methods shown in Figure 4, which is also why the fish product reaches the customer much fresher.

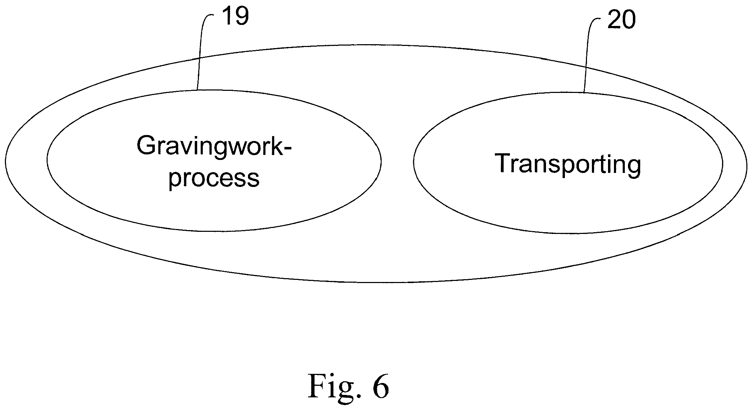

Figure 6 shows the method according to the invention in a simplified manner. Herein, the dry salting process 19, i.e. the graving work process, is combined with the transporting 20, i.e. the transporting work process, such that they take place simultaneously. Since both are very time-consuming processes, time is saved at least by the duration of the shorter process; for instance by the duration of the graving work process, which takes 4 days.

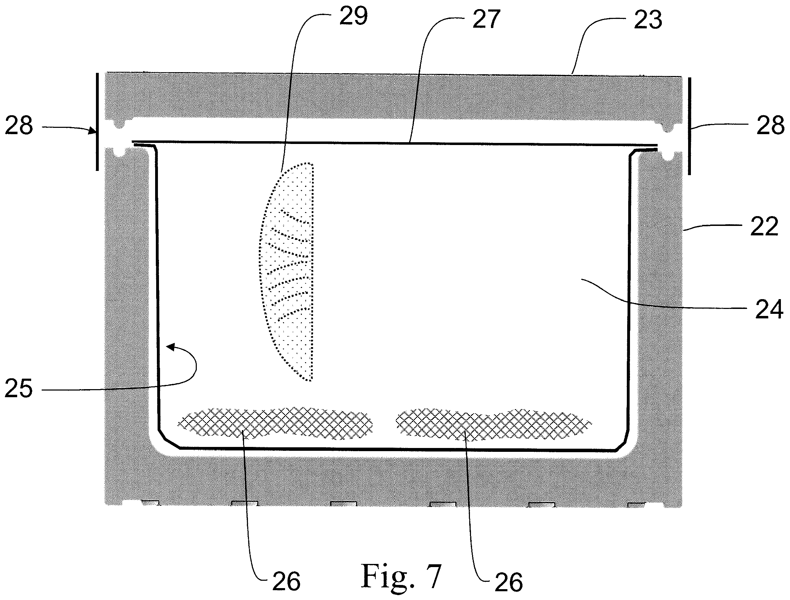

Figure 7 shows an embodiment of the method according to the invention. Herein, the fish fillets 29 are placed preferably longitudinally in accordance with the box in a vertical position in an EPS insulation box 22 which preferably also comprises a lid 23. When the lid 23 and the box 22 itself are joined with one another, a sealed space 24 is formed which may be further secured by an extra seal 28, which may be for instance a tape or another seal. It is also possible to provide the EPS box 22 with an internal plastic box or plastic sheeting 25 comprising for instance a polyethene, polystyrene, polyamide, propene material or some such material whose thickness may vary from 0.001 mm up to 4 mm.

According to an idea, a separate plastic sheeting 27 may be fastened for instance by welding directly to the plastic box/sheeting 25, enabling the entire package to be made into a hermetically sealed gas atmosphere package. It may be advantageous to provide the EPS box 22 with liquid absorbing elements, such as absorbing substructures 26. The material provided with an absorbing property may even be a material which produces CO₂ gas or another protective gas due to the influence of liquid or water. Typically, however, it will suffice that the box 22 itself is provided with at least a lid 23, making it a sealed space. In this sealed space, the graving work process may be carried out during transport at a temperature of -5°C to +4°C, most preferably at a temperature below +3°C.

The box 22 may preferably be provided with a data system for measuring the temperature, time management, humidity level and for instance salinity of the fish product. Data collected by the data system are most preferably remotely readable by a customer's mobile terminal device, for instance.

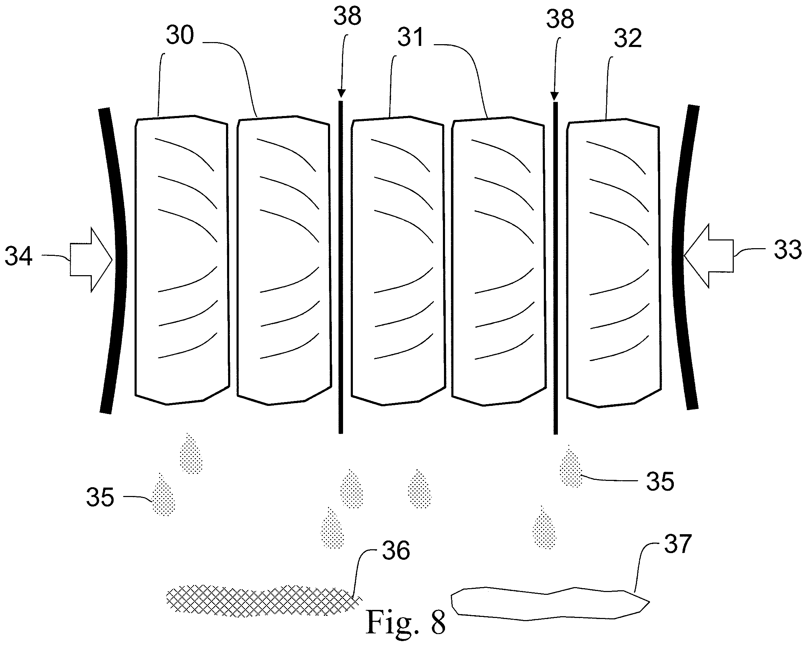

Figure 8 shows a situation in a box 22 of the type of Figure 7, wherein a dry salting work process is carried out. Herein, the fish fillets 30, 31, 32, with the large flesh surfaces facing one another, are arranged so as to form some kind of a pack preferably to be pressed 33, 34 from opposite directions. This is how the dry salting work process can be made to work most preferably. Draining water/brine 35 is recovered by means of absorbing pads 36, for instance. Alternatively, water/brine 37 is left on the bottom of the EPS box 22, or it is recovered in a tank or space of its own.

The pressure force 33, 34 is freely adjustable as desired, enabling optimal conditions to be created for the dry salting work process.

According to an idea, the fish fillets 30, 31, 32 may be mutually of a different quality. They may be for instance seasoned differently, or some of the fillets may be intended for cold smoking while some are to be used for graved fish.

A protective coat or surface 38, which may be for instance board, paper or plastic, may be placed between fillets of different quality. This makes it possible to prevent seasonings or the like specific to the different fillet qualities from migrating from one fillet to another.

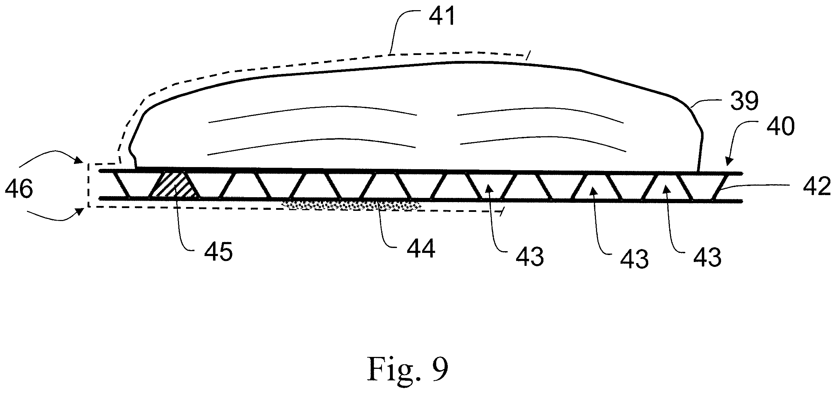

Figures 9, 10, and 11 show embodiments wherein the fish fillet is subjected to a pressing force by means of a vacuum film such that all the most essential parts remain inside the vacuum film, and after this a desired underpressure is sucked inside the vacuum film.

In order to be able to generate a pressing force on the fish product itself by means of the vacuum package, some empty space has to be provided inside the vacuum package which will remain inside the sealed and sucked package, that is, after the sucking of the underpressure has been stopped and the package has been sealed.

Various dry salting processes are known, but these may be divided into two basic forms: a) the fish fillet is subjected to weight or pressure, and b) the fish fillet is subjected to no pressure, or the pressure is very low.

In the method and package according to the invention, underpressure, i.e. pressure, may be adjusted in a simple manner; the higher the underpressure, the greater the pressing force of the vacuum film on the fish product, and vice versa: the lower the underpressure, the smaller the pressing force.

Figure 9 shows how a honeycomb board 42 is used as a work substructure on which a fish fillet 39 is placed and in which empty hollows 43 serve as empty spaces maintaining the underpressure. This enables a desired pressure to be exerted on the fish product. At the same time, the hollows 43 may serve as a storage room for the graving liquid. The hollows may be provided with liquid absorbing mats and/or pads.

The honeycomb board 42 may be made from a viscous material, such as plastic, e.g. polyethylene (PE), polypropylene (PP), polyethylene terephthalate (PET). The material may also be mixed with fillers, such as calcium carbonate, chalk, wood-based materials, viscose fibres, etc.

The honeycomb board 42 may be treated with an antibacterial agent, for instance silver oxide, silver ion or the like, either mixed with the material itself or as a coating. According to an idea, only and merely parts of the honeycomb board 42 are treated that are in contact with the fish product itself, for instance an upper surface 40 of the honeycomb board.

It is known that in the dry salting work process liquid is generated during the work process. It is preferable if this liquid can be recovered such that it substantially no longer is in contact with the fish product itself. For this purpose, the package is provided with an empty space which remains in the underpressurized package and which receives the liquid. According to an idea, the empty space is provided with cellulose-based water-absorbent absorbing pads or mats 45. These may be located for instance inside the hollows 43 and/or underneath a lower surface 44 of the honeycomb board 42.

If the absorbing pad 45 is not in a rigid, i.e. incompressible, empty space, the absorbing pad itself has to be incompressible in the package so as to enable an underpressure to be generated in the package and, further, a pressing force to be generated on the fish product.

According to an idea, the thickness of the honeycomb board 42 is at least 1 mm and no more than 100 mm, preferably less than 20 mm and most preferably between 3 and 6 mm.

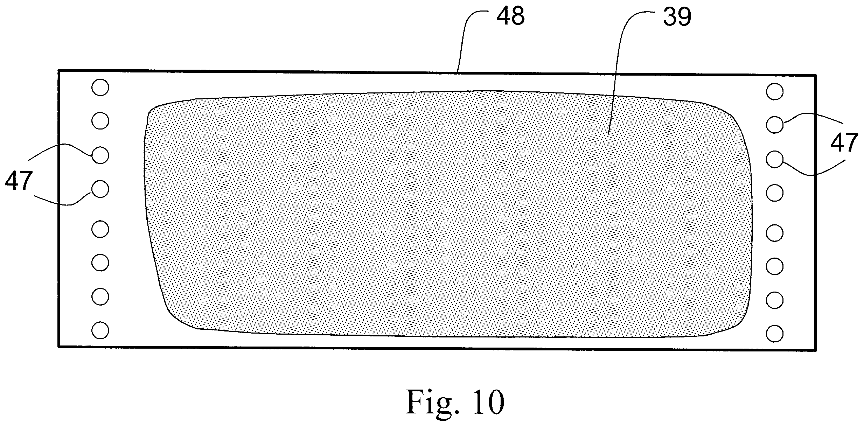

Figure 10 is a top view showing the honeycomb 42 of Figure 9. The fish fillet 39 is placed on the honeycomb board 42. The upper surface of the honeycomb board 42 is provided with holes or openings 47 such that a connection is provided therethrough to the hollows 43. This ensures that it is possible to generate an extremely appropriate pressure from all sides of the fish fillet 39 and that the generated process liquid is sure to drain off.

According to an idea, only the ends of the substructure are provided with openings, as shown in Figure 10, but according to another idea, openings may be located along the entire length and width of the substructure.

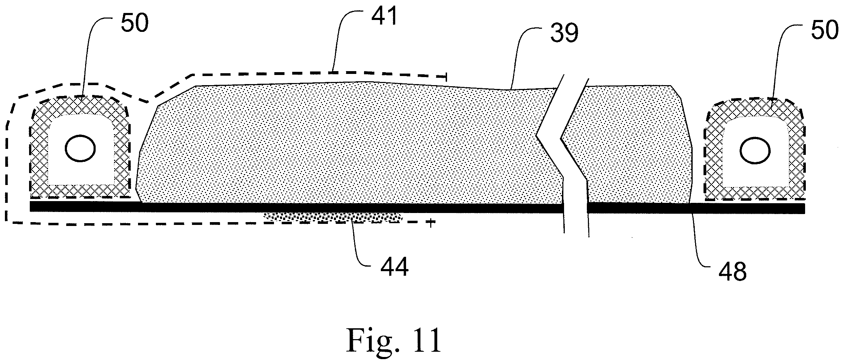

Figures 11 shows an embodiment of the package wherein a fish product is placed on a substructure 48. One end or both ends of the substructure 48 is provided with one or more tubes or sleeves 50 which are manufactured from a hard, i.e. stiff, material and inside which resides an empty space for recovering the process liquid. A wall of the tube 50 may comprise openings which extend through the wall. Inside the tube 50, a liquid-absorbent absorbing pad or mat may be provided. In addition, the empty space maintained by the tube 50 enables a desired underpressure to be generated inside the package since a vacuum film 41 seals said tube 50 in the same interior of the package together with the fish product.

The substructure 48 may contain hollows as already disclosed above, but this is not necessary. Consequently, the substructure 48 may be made of a solid material, for instance wood or wood composite.

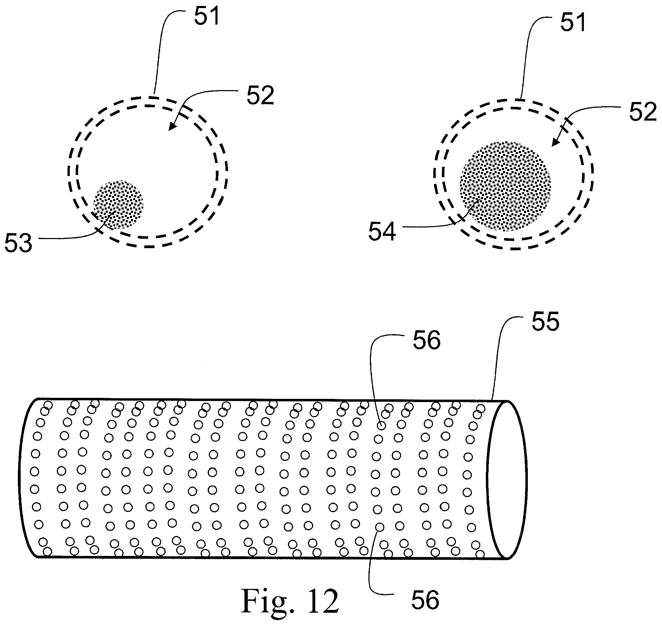

Figure 12 shows the structure of a tube or a sleeve 55 wherein inside a rigid outer shell 51 is provided an empty space 52 which enables a desired underpressure to be generated. The tube 55 is provided with a liquid-absorbent material 53, 54, which may be for instance a cellulose-based material.

It is preferable if the outer shell 51 of the sleeve at least somewhere comprises holes 56 and/or that the material of the outer shell 51 is permeable to liquid.

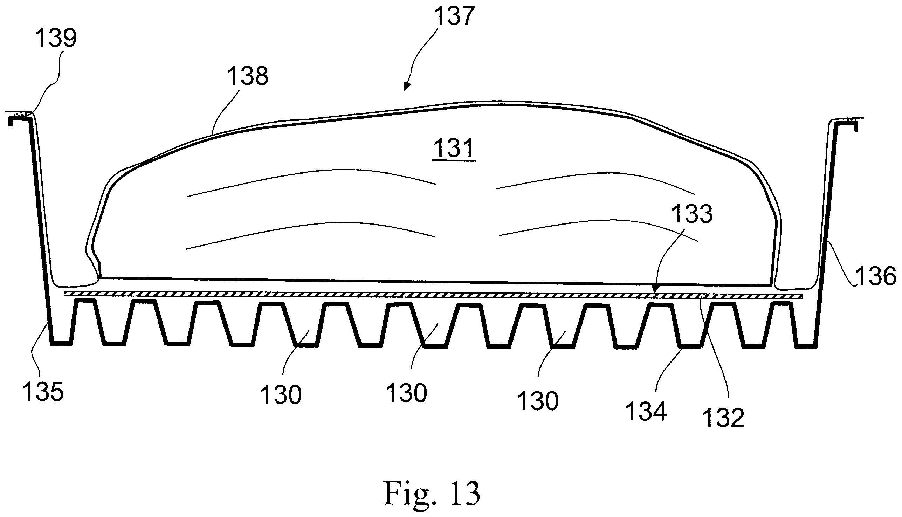

Figure 13 is a schematic, cross-sectional side view showing a seventh fish product package. According to an idea, an empty space 130 may be formed between a plane element 132 receiving the fish product 131 and a three-dimensional surface 134 comprising depth forms and arranged on a side of the plane element 132 opposite a surface 133 included in the plane element 132 and receiving the fish product 131. The three-dimensional surface 134 may comprise for instance honeycomb-like, wavelike, lattice-like, etc. forms, and it may support the plane element 132 so that this will not collapse in to the recesses due to the influence of underpressure. The empty space 130 may be provided with a liquid-absorbent material, which may be an antibacterial material or a material treated so as to make it antibacterial. According to an idea, the liquid-absorbent material may further produce small amounts of carbon dioxide in the empty space. This of course decreases the pressure difference over the environment, but by dimensioning the carbon dioxide production capacity appropriately it is, however, possible to keep the interior of the package underpressurized, in which case the fish product is still subjected to pressure.

The plane element 132 and the three-dimensional surface 132 are sufficiently rigid in structure to maintain the empty space 130 in the undepressurized fish product package that has received the fish product.

The plane element 132 may be a part separate with respect to said three-dimensional surface 134. The plane element may thus be manufactured separately and optionally from a material other than that of the three-dimensional surface 134. Preferably, the plane element 132 comprises openings extending therethrough.

According to an idea, the three-dimensional surface 134 is part of a packaging vessel 135 further comprising an edge part 136 extending past the plane element 132 and arranged to frame a space 137 receiving the fish product. Such a packaging vessel may be manufactured for instance from a polymer material by a deep drawing method or injection moulding. The packaging vessel 135 is preferably designed to be stackable, in other words, empty packaging vessels may be arranged on top of and inside one another.

According to another idea, the empty space 130 is formed at least partly but even completely by the three-dimensional forms in the plane element 132. In such a case, a surface of the packaging vessel 135 settling towards the plane element 132 may be substantially flat.

An airtight packaging film 138 is attached to the packaging vessel 135 for instance by means of a weld or glue seam 139, which forms an airtight joint. From the interior sealed by the film 138 and the packaging vessel 135 - as also from the empty space 130 - gases are sucked substantially off, in which case the film is in close conformity pressed against the fish product and the packaging vessel. At the same time, the fish product can be subjected to pressure.

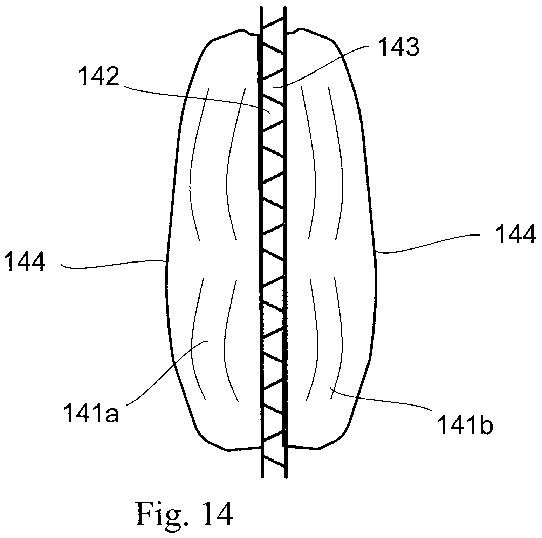

Figure 14 is a schematic, cross-sectional side view showing an eighth fish product package. Fish products 141a, 141b may be placed on different sides of a substructure 142. This comprises an empty space 143 which communicates with both sides of the substructure 142 via openings or the like. By means of a film or films 144, an interior is formed into which a vacuum is sucked in a manner already previously described in the present description. This enables the substructure 142 to be utilized extremely efficiently.

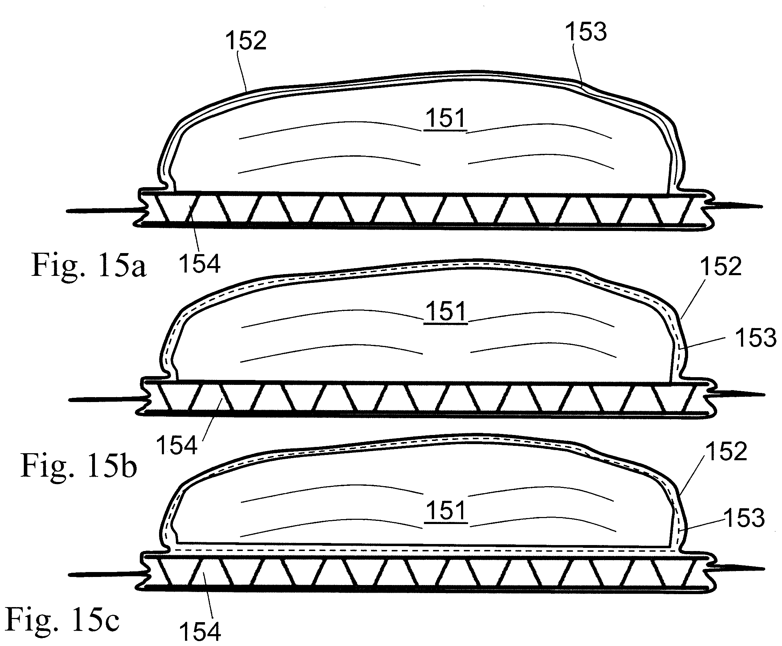

Figures 15a, 15b, and 15c are schematic, cross-sectional side views showing a ninth, tenth, and eleventh fish product package. Therein, a protective coat 153 made from a plasticizer-free material is arranged between a fish product 151 and a packaging film 152. The protective coat 153 decreases the contact surface area of the fish product 151 with the packaging film 152. The protective coat 153 makes it possible to use in the manufacture of the packaging film 152 a material whose contact with the fish product itself would not be desirable. Such materials may be for instance plastic mixtures comprising plasticizers.

The protective coat 153 may be for instance paper or another cellulose-based material, plasticizer-free plastic film whose material may be for instance polypropylene or polyethylene.

The protective coat 153 shown in Figure 15a at least substantially has no holes or openings. The protective coat 153 shown in Figure 15b comprises openings extending therethrough. The protective coat 153 shown in Figure 15c is arranged not only between the packaging film 153 and the fish product but between the substructure 154 and the fish product as well.

The idea of the package according to the invention may be summed up such that the package comprises an empty space enabling a) forming an underpressure and b) recovering process liquid, and that c) the empty space being arranged inside a hermetically sealed package, for instance a vacuum package.

The idea of an embodiment of the method according to the invention may be summed up such that a work process, primarily a dry salting work process, alternatively a wet salting work process, and further, optionally at least a portion of a cooking work process, is carried out in the package. Said work processes take place at a controlled low temperature, which is -8°C to +12°C, preferably always less than +5°C but more than -5°C, and most preferably less than +4°C.

In the wet salting method, the salt concentration is typically 7% to 15%, and it is always performed as a cold process, the temperature thus typically being about +3°C and duration 3 to 16 hours, typically 4 to 8 hours.

In a method according to the invention, the procedure is as follows.

A fish is slaughtered and filleted in the *pre rigor* condition and, most preferably, the fish is skinned and the dark flesh underlying the skin is removed all the way to a depth of 2 to 9 mm, the ends of the bones being cut at the same time. This reduces the pull resistance of the bones by 50% when the bones themselves are being removed.

The fish fillet may be left for 8 to 12 hours at a temperature of +2°C to +4°C to cook, which reduces the pull resistance of the bones by 50% upon bone removal.

Typically, the fish fillet spends 15 to 20 hours in the wet salting process in about 8% brine and at a temperature of +4°C. After this, the *pre rigor* condition has come to an end if the skin has been removed together with the dark flesh and the ends of the bones have been cut at the same time. After this the bones are very easy to remove when the fish fillet is removed from the wet salting work process.

After the bones have been removed, possible spices and seasoning mixtures, such as various peppers, can be applied to the fish fillet together with for instance honey, maple syrup, sugar, alcohol or another condiment or ingredient.

Next, the fish fillet is packed in the fish product package described in the present description, which prevents air external to the package from contacting the fish product
After the fish product has been packed, a transporting work process may start, to be performed between -5°C and +8°C, for instance at a temperature of +4°C. Thus, one work process is combined with another, in this case a graving work process is combined with a transporting work process.

The graving work process typically takes 1 to 3 days, and it thus takes place during the transporting work process. The transporting work process may of course take longer than the graving work process, but this is not detrimental.

The salting affects the fish flesh, such as a salmon fillet, such that it is possible to transport it to the destination much colder than so-called fresh salmon, such as an unsalted *pre rigor* salmon fillet. The latter may be transported only at temperatures above 0°C. Instead, in the transporting work process of the method according to the invention the temperature may be clearly lower, even as low as -7°C, without the fish product being damaged in any way.

If the transporting work process is carried out for instance at a temperature of about -5°C, the fillet may be transported even for two (2) weeks without the quality deteriorating in any way.

In some cases, features disclosed in this application may be used as such, regardless of other features. On the other hand, when necessary, features disclosed in this application may be combined in order to provide different combinations.

In summary, it may be stated that the method according to the invention is characterized by arranging in said vacuum package an empty space, forming an underpressure in the vacuum package by means of the empty space, and by maintaining the empty space in the package, the underpressure generating pressure on the fish product.

It may further be stated that the fish product package according to the invention is characterized in that it comprises a substantially rigid structure comprising an empty space, the empty space being in a gas-exchanging connection with the interior, and the strength of the rigid structure being dimensioned to maintain the empty space in the underpressurized fish product package that has received the fish product.

The drawings and the related description are only intended to illustrate the idea of the invention. It will be apparent to a person skilled in the art that the invention is not restricted to the above-described embodiments disclosing the invention through some examples, but various modifications and different applications of the invention are feasible within the inventive idea defined in the accompanying claims.

## Claims

1. A method for packing a fish product, the method comprising packing the fish product in a vacuum package,
the vacuum package comprising a vacuum film (41) and an empty space formed in a substructure (42) or a sleeve/tube (50),
placing a fish product (39) in the vacuum film (41),
sucking air from within the vacuum film (41),
sealing the vacuum film (41) after generating a vacuum within it, the vacuum film (41) therefore generating a pressing force on the fish product (39),
**characterised by**
maintaining the empty space (43) in the package, and by
carrying out in the package a fish dry salting process, i.e. a graving work process, which takes at least 12 hours, at most 6 days, preferably at most 4 days, at least partly simultaneously with a refrigerated transporting work process, in which refrigerated transporting work process transport and storage temperatures are between -5°C and +8°C, preferably between 0°C and +4°C.

2. A method as claimed in claim 1, **characterised by** recovering process liquid/brine by absorbing pads (36) so that it is no longer capable of affecting a work process or quality of the fish product (39).

3. A method as claimed in any one of the preceding claims, **characterised by** the fish product (39) being of a *pre rigor* quality.

4. A method as claimed in any one of the preceding claims, **characterised by** prior to placing the fish product (39) in the vacuum package, skinning the fish and removing the underlying dark flesh therefrom, all the way to a depth of 2 to 9 mm, and cutting at the same time the nerve ends of the bones, leaving the rest of the bones in the fish flesh itself.

5. A method as claimed in any one of claims 1 to 3, **characterised by** placing in the vacuum package a fish product (39) with the skin left unremoved but the bones removed.

6. A method as claimed in claim 5, **characterised by** subjecting the fish product (39) arranged in the vacuum package first to the graving and transporting work process and only after this removing the bones.

7. A method as claimed in claim 1, **characterised by** arranging said empty space (43) in a substructure (42), and placing fish products on different sides of the substructure.

## Patentansprüche

1. Verfahren zum Verpacken eines Fischprodukts, wobei das Verfahren
das Verpacken des Fischprodukts in eine Vakuumverpackung umfasst,
wobei die Vakuumverpackung einen Vakuumfilm (41) und einen leeren Raum gebildet in einer Unterstruktur (42) oder einer Hülle/Schlauch (50),
die Platzierung des Fischprodukts (39) in einem Vakuumfilm (41),
die Absaugung der Luft innerhalb des Vakuumfilms (41),
die Versiegelung des Vakuumfilms (41) nach der Erzeugung eines Vakuums darin,
dementsprechend die Erzeugung einer Anpresskraft durch den Vakuumfilm (41) auf das Fischprodukt (39),
**dadurch gekennzeichnet,**
**dass** der leere Raum (43) in der Verpackung erhalten bleibt, und ein Prozess des Fisch-Trocken-Salzens in der Verpackung d.h. ein Gravierarbeitsprozess, der mindestens 12 Stunden, höchstens 6 Tage, vorzugsweise höchstens 4 Tage dauert, mindestens teilweise gleichzeitig mit einem gekühlten Transportarbeitsprozess, wobei die Transport- und Lagertemperaturen beim gekühlten Transportarbeitsprozess zwischen -5 °C und + 8 °C, vorzugsweise zwischen 0 °C und + 4 °C liegen, durchgeführt wird, umfasst.

2. Verfahren wie beansprucht in Anspruch 1, **dadurch gekennzeichnet, dass** die Prozessflüssigkeit / Salzlösung durch Aufsaugkissen (36) zurückgewonnen wird, so dass sie einen Arbeitsprozess oder die Qualität des Fischprodukts (39) nicht mehr beeinflussen kann.

3. Verfahren wie beansprucht in einem der vorhergehenden Ansprüche, **dadurch gekennzeichnet, dass** das Fischprodukt (39) eine *pre-rigor* Qualität aufweist.

4. Verfahren wie beansprucht in einem der vorhergehenden Ansprüche, **dadurch gekennzeichnet, dass**, vor dem Platzieren des Fischprodukts (39) in die Vakuumverpackung, der Fisch enthäutet und das darunterliegende dunkle Fleisch bis zu einer Tiefe von 2 bis 9 mm entfernt wird und gleichzeitig die Nervenenden von den Gräten geschnitten werden, wobei der Rest der Gräten im Fischfleisch selbst verbleibt.

5. Verfahren wie beansprucht in einem der Ansprüche 1 bis 3, **dadurch gekennzeichnet, dass** ein Fischprodukt (39) in die Vakuumverpackung mit der nicht entfernten Haut, aber den entfernten Gräten platziert wird.

6. Verfahren wie beansprucht in Anspruch 5, **dadurch gekennzeichnet, dass** das, in der Vakuumverpackung angeordnete, Fischprodukt (39) zuerst einem Gravier- und Transportarbeitsprozess unterzogen wird und erst danach die Gräten entfernt werden.

7. Verfahren wie beansprucht in Anspruch 1, **dadurch gekennzeichnet, dass** der besagte leere Raums (43) in einer Unterstruktur (42) angeordnet ist und das Fischprodukt auf verschiedenen Seiten der Unterstruktur platziert wird.

## Revendications

1. Procédé d'emballage d'un produit de poisson, le procédé comprenant l'emballage du produit de poisson dans un emballage sous vide,
l'emballage sous vide comprenant un film sous vide (41) et un espace vide formé dans une sous-structure (42) ou un manchon/tube (50),
le placement d'un produit de poisson (39) dans le film sous vide (41),
l'aspiration d'air de l'intérieur du film sous vide (41),
le scellage du film sous vide (41) après la génération d'un vide à l'intérieur de celui-ci, le film sous vide (41) générant par conséquent une force de pressage sur le produit de poisson (39),
**caractérisé par**
le maintien de l'espace vide (43) dans l'emballage, et par
la réalisation dans l'emballage d'un processus de salage à sec de poisson, c'est-à-dire un processus de travail de gravage, qui prend au moins 12 heures, au plus 6 jours, de préférence au plus 4 jours, au moins partiellement simultanément à un processus de travail de transport réfrigéré, dans lequel des températures de transport et de stockage de processus de travail de transport réfrigéré sont entre -5 °C et +8 °C, de préférence entre 0 °C et +4 °C.

2. Procédé selon la revendication 1, **caractérisé par** la récupération du liquide de processus/saumure par des tampons absorbants (36) de sorte qu'il ne soit plus apte à altérer un processus de travail ou la qualité du produit de poisson (39).

3. Procédé selon l'une quelconque des revendications précédentes, **caractérisé par** le produit de poisson (39) qui est d'une qualité de pre rigor.

4. Procédé selon l'une quelconque des revendications précédentes, **caractérisé par** avant le placement du produit de poisson (39) dans l'emballage sous vide, l'écaillage du poisson et le retrait de la chair foncée sous-jacente de celui-ci, tout du long à une profondeur de 2 à 9 mm, et la découpe en même temps des extrémités nerveuses des arêtes, laissant le reste des arêtes dans la chair du poisson lui-même.

5. Procédé selon l'une quelconque des revendications 1 à 3, **caractérisé par** le placement dans l'emballage sous vide d'un produit de poisson (39) avec la peau mais sans les arêtes.

6. Procédé selon la revendication 5, **caractérisé par** la soumission du produit de poisson (39) agencé dans l'emballage sous vide tout d'abord au processus de travail de gravage et de transport et seulement après cela au retrait des arêtes.

7. Procédé selon la revendication 1, **caractérisé par** l'agencement dudit espace vide (43) dans une sous-structure (42), et le placement de produits de poisson sur différents côtés de la sous-structure.
